# EUROPEAN PATENT SPECIFICATION

(11) **EP 1 792 322 B1**
(45) Date of publication and mention of the grant of the patent: **09.11.2016**
(21) Application number: 05785726.0
(22) Date of filing: 12.09.2005
(51) Int. Cl.: C25D 11/06, C25D 11/26, H01G 9/00, H01G 9/028

(54) **SOLID ELECTROLYTIC CAPACITOR ELEMENT, SOLID ELECTROLYTIC CAPACITOR AND PRODUCTION METHOD THEREOF**
FESTES ELEKTROLYTISCHES KONDENSATORELEMENT, FESTER ELEKTROLYTISCHER KONDENSATOR UND HERSTELLUNGSVERFAHREN DAFÜR
ÉLÉMENT DE CONDENSATEUR À ÉLECTROLYTE SOLIDE, CONDENSATEUR À ÉLECTROLYTE SOLIDE ET PROCÉDÉ DE FABRICATION DE CELUI-CI

(30) Priority: 13.09.2004 JP 2004265369
(43) Date of publication of application: 06.06.2007
(73) Proprietor: Murata Manufacturing Co., Ltd., Nagaokakyo-shi, Kyoto 617-8555 (JP)
(72) Inventor: NAITO, Kazumi, Chiba-shi, Chiba 267-0056 (JP); YABE, Shoji, Chiba-shi, Chiba 267-0056 (JP)
(74) Representative: Strehl Schübel-Hopf & Partner
(86) International application number: PCT/JP2005/017205
(87) International publication number: WO 2006/030922

(56) References cited:
- US-A1- 2003 142 465
- PATENT ABSTRACTS OF JAPAN vol. 014, no. 308 (E-0947), 3 July 1990 (1990-07-03) & JP 02 100309 A (NIPPON CHEMICON CORP), 12 April 1990 (1990-04-12) cited in the application
- PATENT ABSTRACTS OF JAPAN vol. 016, no. 521 (E-1285), 27 October 1992 (1992-10-27) & JP 04 196305 A (ELNA CO LTD; others: 01), 16 July 1992 (1992-07-16)
- PATENT ABSTRACTS OF JAPAN vol. 016, no. 048 (E-1163), 6 February 1992 (1992-02-06) & JP 03 252117 A (MATSUSHITA ELECTRIC IND CO LTD), 11 November 1991 (1991-11-11)
- PATENT ABSTRACTS OF JAPAN vol. 013, no. 401 (E-816), 6 September 1989 (1989-09-06) & JP 01 144615 A (SANYO ELECTRIC CO LTD; others: 01), 6 June 1989 (1989-06-06)

## Description

### TECHNICAL FIELD

The present invention relates to a production method of a good solid electrolytic capacitor element with low equivalent series resistance (ESR), a, capacitor element obtained by this method, a capacitor obtained by this capacitor element, an electronic circuit comprising this capacitor, and an electronic device comprising this capacitor.

### BACKGROUND ART

As for a capacitor having high capacitance and low ESR used in various electronic devices, an aluminum solid electrolytic capacitor and a tantalum solid electrolytic capacitor are known.

The solid electrolytic capacitor is produced by sealing a solid electrolytic capacitor element in which an aluminum foil having fine pores in the surface layer or a tantalum powder sintered body having fine pores in the inside is used as one electrode (electric conductor) and which comprises a dielectric layer formed on the surface layer of the electrode, the other electrode (usually a semiconductor layer) provided on the dielectric layer, and an electrode layer stacked on the other electrode.

As for the semiconductor layer, an organic or inorganic compound is used but in the light of heat resistance or low ESR property of the produced capacitor, an electrically conducting polymer is used with preference. The electrically conducting polymer is a polymer having a high electric conductivity of 10⁻² to 10³ S·cm⁻¹. The high electric conductivity is brought out by adding an electron-donating compound called a dopant to a planar polymer having a conjugated double bond (usually, the polymer is an insulating material or has a very low electric conductivity). Specific examples of the method for forming an electrically conducting polymer as the semiconductor layer include a method of polymerizing a monomer capable of being polymerized to an electrically conducting polymer in the fine pores of the electric conductor by supplying thereto an appropriate oxidizing agent or an electron in the presence of a dopant. The dopant is entrained upon polymerization of the monomer, whereby an electrically conducting polymer is obtained.

The dielectric layer may deteriorate due to reaction or the like at the formation of the semiconductor layer and is repaired by an electrochemical method called chemical formation. In one example of the repairing process, an electrically conducting layer having formed thereon a semiconductor layer is dipped in an electrolytic solution where a mineral acid (e.g., phosphoric acid, sulfuric acid) or a salt thereof, or an organic acid (e.g., acetic acid, adipic acid) or a salt thereof is dissolved as the electrolyte, and a predetermined voltage is applied between the electric amended sheet conductor serving as an anode and a cathode separately provided in the electrolytic solution.

JP-A-63-268234 (the term "JP-A" as used herein means an "unexamined published Japanese patent application") describes a method of performing re-chemical formation in a thick phosphoric acid solution at a concentration of 65 mass% or more after chemical formation. Also, JP-A-2-100309 describes a chemical forming method of effecting anodic oxidation by adding an inorganic polymer in a chemical forming solution.

US 2003/0142465 shows a method for producing a solid electrolytic capacitor element with the step of re-chemical formation before forming the semiconductor layer.

### DISCLOSURE OF THE INVENTION

Recent electronic devices tend to consume a large amount of power and be designed to instantaneously pass a large electric current while setting the voltage on use to be low, and the solid electrolytic capacitor as a component used therefor must be a large-capacitance capacitor exhibiting a lower ESR value. However, in conventional high-capacitance capacitors used with high power consumption and low voltage, more reduction of ESR is limited.

Accordingly, an object of the present invention is to provide a production method of a high-capacitance solid electrolytic capacitor with a good ESR value.

As a result of intensive investigations to attain the above-described object, the present inventors have found that when a dielectric layer on an electric conductor after forming a semiconductor layer comprising at least an electrically conducting polymer is repaired by re-chemical formation in an electrolytic solution using a dopant as the electrolyte, a solid electrolytic capacitor element exhibiting a lower ESR value can be obtained while preventing ESR from deterioration which is a side effect associated with the repairing. The present invention has been accomplished based on this finding.

That is, the present invention provides a production method of a solid electrolytic capacitor element, and a solid electrolytic capacitor element obtained by the method, according to the independent claims.

Examples of the electric conductor for use in the present invention include a metal or alloy mainly comprising at least one member selected from tantalum, niobium, titanium and aluminum; a niobium oxide; and a mixture of at least two of the members selected from these metals, alloy and niobium oxide.

In the case of using a metal as the electric conductor, the metal may be used after subjecting a part thereof to at least one treatment selected from carbidation, phosphation, boronation, nitridation and sulfidation.

The electric conductor is not particularly limited in its shape and is used, for example, in the form of foil, plate or bar or in a form created by shaping or sintering after shaping the powder of the electric conductor. The electric conductor may also have a shape resulting from attaching a powdered electric conductor to a part of a foil-like or plate-like metal and sintering it. Furthermore, the electric conductor may be surface-treated by etching or the like to produce fine pores. In the case of a shape created by shaping or shaping and then sintering the powder of the electric conductor, fine pores can be produced in the inside after shaping or sintering by appropriately selecting the pressure at the shaping.

An outgoing lead may be connected directly to the electric conductor but in the case of a shape created by shaping or shaping and sintering the powder of the electric conductor, it is also possible to shape a part of a separately prepared outgoing lead wire (lead foil) together with the powder at the shaping and use the outgoing lead wire (or lead foil) outside the shaped portion as the outgoing lead for one electrode of the solid electrolytic capacitor element. Furthermore, a part of the electric conductor may be used as an anode part by not forming the semiconductor layer therein. At the boundary between the anode part and the semiconductor layer-forming part, an insulating resin may be attached and cured like a headband so as to prevent the semiconductor layer from creeping up.

Preferred examples of the electric conductor for use in the present invention include an aluminum foil with the surface being etched, and a sintered body having many fine pores in the inside, which is obtained by shaping and then sintering a powder such as tantalum powder, niobium powder, alloy powder mainly comprising tantalum, alloy powder mainly comprising niobium, and niobium monoxide powder.

When the electric conductor has a shape of sintered body and is produced by using a powder having a small particle diameter, a sintered body having a large specific surface area per mass can be produced. In the present invention, it is preferred that the CV value (product of capacitance and chemical formation voltage described later) is 80,000 µFV/g or more in the case of tantalum powder or 150,000 µFV/g or more in the case of niobium powder or niobium monoxide powder and the mass is 50 mg or more, because the produced solid electrolytic capacitor element can have a large capacitance with a small volume.

The dielectric layer formed on the surfaces of the electric conductor of the present invention includes a dielectric layer mainly comprising at least one member selected from metal oxides such as Ta₂O₅, Al₂O₃, TiO₂ and Nb₂O₅. This dielectric layer can be formed by dipping the electric conductor in an electrolytic solution containing an organic acid (e.g., acetic acid, adipic acid, benzoic acid) or a salt thereof, or a mineral acid (e.g., phosphoric acid, sulfuric acid, boric acid) or a salt thereof, and applying a voltage between the electric conductor serving as the anode and a cathode plate separately disposed in the electrolytic solution (this treatment is called "chemical formation"). The conditions of chemical formation, such as chemical formation temperature, chemical formation time and current density at chemical formation, are determined by taking account of the type, mass and size of the electric conductor, the capacitance and operating voltage of the objective solid electrolytic capacitor element or the like. The chemical formation temperature is usually from room temperature to 100°C, and the chemical formation time is usually from several hours to several days.

The other electrode formed on the dielectric layer of the capacitor element of the present invention include at least one organic semiconductor selected from electrically conducting polymers described later. As long as an electrically conducting polymer is contained as an essential component, at least one compound selected from the other organic semiconductors and inorganic semiconductors may be contained as a layer or as a mixture.

Specific examples of the organic semiconductor include an organic semiconductor comprising benzopyrroline tetramer and chloranil, an organic semiconductor mainly comprising tetrathiotetracene, an organic semiconductor mainly comprising tetracyanoquinodimethane, and an organic semiconductor mainly comprising an electrically conducting polymer obtained by doping a dopant in a polymer containing a repeating unit represented by the following formula (1) or (2): 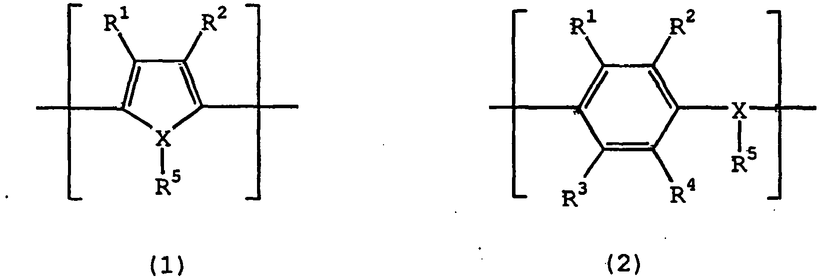 wherein R¹ to R⁴ each independently represents a hydrogen atom, an alkyl group having from 1 to 6 carbon atoms or an alkoxy group having from 1 to 6 carbon atoms, X represents an oxygen atom, a sulfur atom or a nitrogen atom, R⁵ is present only when X is a nitrogen atom, and represents a hydrogen atom or an alkyl group having from 1 to 6 carbon atoms, and each of the pairs R¹ and R², and R³ and R⁴ may combine to form a cyclic structure.

In the present invention, the polymer containing a repeating unit represented by formula (1) is preferably a polymer containing, as a repeating unit, a structure unit represented by the following formula (3) : 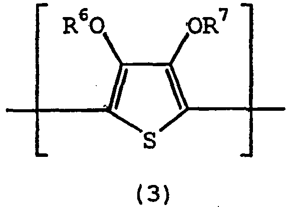 wherein R⁶ and R⁷ each independently represents a hydrogen atom, a linear or branched, saturated or unsaturated alkyl group having from 1 to 6 carbon atoms, or a substituent for forming at least one 5-, 6- or 7-membered saturated hydrocarbon cyclic structure containing two oxygen atoms when the alkyl groups are combined with each other at an arbitrary position. The cyclic structure includes a structure having a vinylene bond which may be substituted, and a phenylene structure which may be substituted.

The electrically conducting polymer containing such a chemical structure is being electrically charged and a dopant is doped therein. The dopant is not particularly limited and a known dopant can be used.

Preferred examples of the dopant include a compound having a sulfonic acid group, and a boron compound in which a carboxylic acid is coordinated to the boron atom. Representative examples of such a compound include a sulfonic acid having an aryl group, such as benzenesulfonic acid, toluenesulfonic acid, naphthalenesulfonic acid, anthracenesulfonic acid, benzoquinonesulfonic acid, naphthoquinonesulfonic acid and anthraquinonesulfonic acid; a sulfonic acid having an alkyl group, such as butylsulfonic acid, hexylsulfonic acid and cyclohexylsulfonic acid; various oligomer or polymer (polymerization degree: from 2 to 200) sulfonic acids such as polyvinylsulfonic acid; and a salt (e.g., ammonium salt, alkali metal salt, alkaline earth metal salt) of these sulfonic acids. Such a compound may have various substituents and may have a plurality of sulfonic acid groups. Examples thereof include 2,6-naphthalenedisulfonic acid and 1,2-ethane disulfonic acid. Examples of the boron compound include ammonium borodisalicylate, a hydrate thereof and boron-1, 2-carboxybenzene ammonium. As for the dopant, a plurality of dopants may be used in combination.

The dopant for use in the present invention is described as a compound but at the actual action as a dopant, a part is in the charged (δ-) state or ionized (mostly being anion) state and therefore, those in such a state are also included (for example, in the case of a benzenesulfonic acid, benzenesulfonate anion is also included).

Examples of the polymer containing a repeating unit represented by formula (1), (2) or (3) include polyaniline, polyoxyphenylene, polyphenylene sulfide, polythiophene, polyfuran, polypyrrole, polymethylpyrrole, and a substitution derivative and a copolymer thereof. Among these, preferred are polypyrrole, polythiophene and a substitution derivative thereof (e.g., poly(3,4-ethylenedioxythiophene)).

The above-described semiconductor layer is formed by a pure chemical reaction (for example, a solution reaction, a vapor phase reaction, a solid-liquid reaction or a combination thereof), an electrolytic polymerization technique, or a combination of these methods. The semiconductor layer is preferably produced by using an electrolytic polymerization technique at least once, because presumably by virtue of no branching in the electrically conducting polymer chain or uniform thickness of the semiconductor layer on the outer surface layer of the electric conductor, the initial ESR value is low as compared with other methods.

Specific examples of the inorganic semiconductor include at least one compound selected from molybdenum dioxide, tungsten dioxide, lead dioxide and manganese dioxide.

When the organic or inorganic semiconductor used has an electric conductivity of 10⁻² to 10³ S·cm⁻¹, the solid electrolytic capacitor produced can have a small ESR value and this is preferred.

In order to repair fine defects of the dielectric layer, which are generated due to formation of the semiconductor layer, re-chemical formation is usually performed. In the present invention, it is important to perform the re-chemical formation in an electrolytic solution using a dopant as the electrolyte.

The dopant which can be used for the re-chemical formation is, for example, a dopant of giving an electrically conducting polymer having an electric conductivity of 10¹ to 10³ S·cm⁻¹ when pyrrole or 3,4-ethylenedioxythiophene is used as a representative monomer and the dopant is doped simultaneously with electrolytic polymerization of the monomer. As for the electrolyte in the re-chemical formation, a mineral acid, an organic acid or a salt thereof described above for the formation (chemical formation) of a dielectric layer has been conventionally used, but when re-chemical formation is performed with such an electrolytic solution, a mineral acid ion or an organic acid ion is entrained in the semiconductor layer at the same time with repairing of the dielectric layer and adversely affects the dopant of the electrically conducting polymer already contained in the semiconductor layer. In an extreme case, the mineral acid ion or organic acid ion may expel the dopant already contained. If a sufficiently large amount of a dopant is not orderly aligned in the semiconductor layer, the semiconductor layer comes to have high resistance and the produced solid electrolytic capacitor is deteriorated in terms of the ESR value.

On the other hand, when the re-chemical formation is performed in an electrolytic solution using a dopant as the electrolyte as in the present invention, the dopant is entrained in the semiconductor layer at the same time with repairing of the dielectric layer and since this dopant is a dopant of giving an electrically conducting polymer having a relatively high electric conductivity, even if the dopant already contained in the semiconductor layer is expelled, the dopant entrained exerts the same activity and allows for almost no effect of the expelling and the semiconductor layer maintains the low resistance value, as a result, the produced solid electrolytic capacitor is considered to exhibit its original excellent ESR value.

Examples of the dopant for use in the re-chemical formation of the present invention includes an organic compound having a sulfonic acid group. Specific examples of the organic compound having a sulfonic acid group include those described above as the dopant of the electrically conducting polymer.

Furthermore, it is more preferred to perform the re-chemical formation by using the same dopant as the dopant already contained in the electrically conducting polymer constituting the semiconductor layer, because even if entrainment of a new dopant or expelling of the old dopant occurs upon re-chemical formation, since these are the same dopant, the type and size of the dopant considered to exist in the electrically conducting polymer chain are the same and the voids in the electrically conducting polymer can be uniform, as a result, the semiconductor layer is prevented from unnecessary elevation in the resistance value.

The method for re-chemical formation is the same as the above-described method of forming a dielectric layer by chemical formation. The re-chemical formation voltage is usually lower than the chemical formation voltage, preferably from 1/2 or more of the chemical formation voltage to less than the chemical formation voltage. If the voltage exceeds the chemical formation voltage, polymerization of an unreacted oligomer takes place and insufficient repairing of the dielectric layer disadvantageously results. If the re-chemical formation voltage is the same as the chemical formation voltage, the interface of the dielectric layer, where the semiconductor layer is attached, can be hardly repaired and the leakage current is sometimes rather worsened by the re-chemical formation. If the re-chemical formation voltage is less than 1/2 of the chemical formation voltage, the breakdown voltage may decrease in some capacitors produced.

In the case of forming the semiconductor layer in multiple stages, the re-chemical formation of the present invention using a dopant as the electrolyte may be performed at an arbitrary stage an arbitrary number of times, but after the final formation of the semiconductor layer, it is preferred to perform the re-chemical formation of the present invention.

In the present invention, an electrode layer is provided on the semiconductor layer formed by the above-described method or the like. The electrode layer can be formed, for example, by solidification of an electrically conducting paste, plating, metal deposition or lamination of a heat-resistant electrically conducting resin film. Preferred examples of the electrically conducting paste include silver paste, copper paste, aluminum paste, carbon paste and nickel paste. One of these may be used or two or more thereof may be used. In the case of using two or more pastes, these pastes may be mixed or stacked as separate layers. The electrically conducting paste applied is then left standing in air or heated and thereby solidified.

Resin and electrically conducting powder such as metal are the main component of the electrically conducting paste but if desired, a solvent for dissolving the resin or a curing agent for the resin is also used. The solvent dissipates at the above-described solidification under heating. As for the resin, various known resins such as alkyd resin, acryl resin, epoxy resin, phenol resin, imide resin, fluororesin, ester resin, imideamide resin, amide resin and styrene resin are used. As for the electrically conducting powder, a powder of silver, copper, aluminum, gold, carbon, nickel or an alloy mainly comprising such a metal, or a mixed powder thereof is used. The electrically conducting powder is usually contained in an amount of 40 to 97 mass%. If the electrically conducting powder content is less than 40 mass%, the electric conductivity of the produced electrically conducting paste disadvantageously becomes low, whereas if the content exceeds 97 mass%, the electrically conducting paste may undergo adhesion failure and this is not preferred. In the electrically conducting paste, the above-described electrically conducting polymer for forming the semiconductor layer or powder of metal oxide may be mixed and used.

Examples of the plating include nickel plating, copper plating, silver plating, gold plating and aluminum plating. Examples of the metal to be deposited include aluminum, nickel, copper, gold and silver.

More specifically, the electrode layer is formed by sequentially stacking, for example, a carbon paste and a silver paste on the semiconductor layer formed. By stacking layers up to the electrode layer on the electric conductor in this way, a solid electrolytic capacitor element is produced.

The solid electrolytic capacitor element of the present invention having such a constitution is jacketed, for example, by resin mold, resin case, metallic jacket case, resin dipping or laminate film, whereby a solid electrolytic capacitor product for various uses can be completed. Among these, a chip solid electrolytic capacitor jacketed by resin mold is preferred, because reduction in the size and cost can be easily and simply achieved.

The resin mold jacketing is specifically described below. A part of the electrode layer of the capacitor element obtained as above is laid on one end part of a separately prepared lead frame having a pair of oppositely disposed end parts, and a part of the electric conductor is laid on the other end part of the lead frame. At this time, when the electric conductor has an anode lead, in order to adjust the dimensions, the anode lead may be used after cutting the distal end thereof. After respective parts are connected electrically or mechanically, i.e. by solidification of an electrically conducting paste for the former (one end part of the lead frame) and by welding for the latter (the other end part of the lead frame), the entirety is molded with a resin while leaving outside a part of each end part of the lead frame, and the lead frame is cut at predetermined portions outside the resin molding and bent (when the lead frame is present on the bottom surface of resin molding and the entirety is molded while leaving outside only the bottom surface or the bottom and side surfaces of the lead frame, only cutting may be sufficient), whereby the capacitor of the present invention is produced.

The lead frame is cut as described above and finally works out to an external terminal of the capacitor. The shape thereof is a foil or flat plate form and the material used therefor is iron, copper, aluminum or an alloy mainly comprising such a metal. The lead frame may be partially or entirely applied with at least one plating layer such as solder, tin, titanium, gold, silver, nickel, palladium and copper.

After or before the above-described cutting and bending, the lead frame may be subjected to various platings. It is also possible to plate the lead frame before mounting and connecting the solid electrolytic capacitor element thereon and again plate it at any time after sealing.

In the lead frame, a pair of oppositely disposed end parts are present and a gap is provided between these end parts, whereby the electric conductor part and the electrode layer part of each capacitor element are insulated from each other.

With respect to the resin used for resin mold jacketing, a known resin used for encapsulation of a capacitor, such as epoxy resin, phenol resin, alkyd resin, ester resin and allyl ester resin, can be employed. In all of these resins, when a low-stress resin (for example, a resin containing usually 70 vol% or more of a filler and having a thermal expansion coefficient α of 3×10⁻⁵/°C or less) generally available on the market is used, the encapsulation stress imposed on the capacitor element, which is generated at the encapsulation, can be mitigated and this is preferred. For the resin molding, a transfer machine is used with preference.

The thus-produced solid electrolytic capacitor may be subjected to an aging treatment so as to repair the thermal and/or physical deterioration of the dielectric layer, which is caused at the formation of electrode layer or at the jacketing. The aging treatment is performed by applying a predetermined voltage (usually, within two times the rated voltage) to the capacitor. The optimal values of aging time and temperature vary depending on the type and capacitance of the capacitor and the rated voltage and therefore, these are previously determined by performing an experiment. The aging time is usually from several minutes to several days and the aging temperature is usually 300°C or less by taking account of thermal deterioration of the voltage-applying jig.

The aging atmosphere may be air or a gas such as argon, nitrogen and helium. Also, the aging treatment may be performed in any one condition of reduced pressure, atmospheric pressure and applied pressure, but when the aging is performed while or after supplying water vapor, stabilization of the dielectric layer sometimes proceeds. The aging may also be performed by supplying water vapor and then allowing the capacitor to stand at a high temperature of 150 to 250°C for several minutes to several hours to remove excess water content. One example of the method for supplying the water vapor is a method of supplying water vapor from a water reservoir placed in the aging furnace by heat.

The method of applying a voltage can be designed to pass an arbitrary current such as direct current, alternating current having an arbitrary waveform, alternating current superposed on direct current, and pulse current. It is also possible to once stop applying a voltage on the way of aging and again apply a voltage.

The solid electrolytic capacitor produced by the method of the present invention can be preferably used, for example, for a circuit using a high-capacitance capacitor, such as central processing circuit and power source circuit. These circuits can be used in various digital devices such as a personal computer, server, camera, game machine, DVD equipment, AV equipment and cellular phone, and electronic devices such as various power sources. The solid electrolytic capacitor produced in the present invention has a very good initial ESR value and therefore, by using this solid electrolytic capacitor, a highly reliable electronic circuit or electronic device ensuring less heat generation even when a large current is passed can be obtained.

### BEST MODE FOR CARRYING OUT THE INVENTION

The present invention is described in greater detail below by specifically referring to Examples, but the present invention is not limited to these Examples.

### Example 1:

A niobium primary powder (average particle diameter: 0.31 µm) ground by utilizing hydrogen embrittlement of a niobium ingot was granulated to obtain a niobium powder having an average particle diameter of 120 µm (this niobium powder was fine powder and therefore, naturally oxidized to contain 90,000 ppm of oxygen). The obtained niobium powder was left standing in a nitrogen atmosphere at 450°C and further in argon at 700°C to obtain a partially nitrided niobium powder (CV: 274,000 µF.V/g) having a nitrided amount of 9,000 ppm. The resulting niobium powder was shaped together with a niobium wire of 0.48 mmφ and the shaped article was sintered at 1,270°C. In this way, a plurality of sintered bodies (electrically conducting bodies) having a size of 4.1x3.5x1.2 mm (mass of each sintered body: 0.06 g; the niobium lead wire was present such that 3.7 mm was inside the sintered body and 8 mm was outside) were produced.

Thereafter, the sintered body was chemically formed in an aqueous 0.1 mass% phosphoric acid solution at 80°C with 20 V for eight hours to form a dielectric layer mainly comprising diniobium pentoxide on the sintered body surface and on a part of the lead wire. Subsequently, an operation of dipping the sintered body in an aqueous 2% iron naphthalene-2-sulfonate solution, drying it to remove water and then performing post-chemical formation in an aqueous 0.1 mass% acetic acid solution at 80°C with 15 V for five minutes was repeated eight times. Furthermore, the sintered body was dipped in a tank (the tank was laminated with a tantalum foil and serving itself as an external electrode) containing a separately prepared mixed solution of 30 mass% ethylene glycol and water, in which a slight amount of 3,4-ethylenedioxythiophene monomer and 4% anthraquinone-2-sulfonic acid were dissolved, and by assigning the anode to the lead wire of the sintered body and the cathode to the external electrode, electrolytic polymerization was performed at 100 µA for 60 minutes. The sintered body was pulled out from the tank, washed with water, washed with an alcohol, dried and then subjected to re-chemical formation in an aqueous 1% anthraquinone-2-sulfonic acid solution at 80°C with 13. V for 15 minutes. This operation of performing electrolytic polymerization and then re-chemical formation was repeated 6 times, whereby a semiconductor layer comprising a polythiophene derivative with a dopant of anthraquinone-2-sulfonate ion was formed on the dielectric layer.

On this semiconductor layer, a carbon paste layer was stacked and dried to provide a carbon layer, and then a silver paste mainly comprising 90 mass% of silver powder and 10 mass% of acryl resin was stacked and dried to form an electrode layer. In this way, a plurality of solid electrolytic capacitor elements were produced. On a pair of end parts of a separately prepared lead frame (copper alloy C151, produced by Hitachi Cable, Ltd., with both surfaces being applied with 10-µm semi-gloss tin plating) serving as an external electrode, the lead wire on the sintered body side and the silver paste surface on the electrode layer side were placed and electrically or mechanically connected by spot-welding for the former and by the same silver paste as used in the electrode layer for the latter. Thereafter, the entirety excluding a part of the lead flame was transfer-molded with epoxy resin and the lead frame outside the mold was cut at a predetermined position and the remaining frame was bent along the jacket to serve as an external terminal. In this way, a chip solid electrolytic capacitor in a size of 7.3x4.3x1.8 mm was produced. Subsequently, the capacitor was aged at 125°C with 7 V for three hours and then passed three times through a tunnel furnace in which the peak temperature was 270°C and the dwelling time in the region of 230°C was 35 seconds, thereby completing a final chip solid electrolytic capacitor.

### Comparative Example 1:

A chip solid electrolytic capacitor was produced in the same manner as in Example 1 except for performing the re-chemical formation in an aqueous 1 mass% phosphoric acid solution in Example 1.

### Comparative Example 2:

A chip solid electrolytic capacitor was produced in the same manner as in Example 1 except for performing the re-chemical formation in an aqueous 0.1 mass% sulfuric acid solution in Example 1.

### Comparative Example 3:

A chip solid electrolytic capacitor was produced in the same manner as in Example 1 except for performing the re-chemical formation in a solution containing 1 mol/liter of LiBF₄ propylene carbonate.

### Example 2:

A chip solid electrolytic capacitor was produced in the same manner as in Example 1 except that in Example 1, the electrolytic polymerization was performed by using naphthalene-2-sulfonic acid in place of anthraquinone-2-sulfonic acid and the dopant at the re-chemical formation was changed from anthraquinone-2-sulfonic acid to naphthalene-2-sulfonic acid.

### Comparative Example 4:

A chip solid electrolytic capacitor was produced in the same manner as in Example 2 except for performing the re-chemical formation in an aqueous 0.1 mass% acetic acid solution.

### Example 3:

A tantalum lead wire (0.40 mmφ) was embedded in a tantalum powder having CV (product of capacitance and chemical formation voltage) of 150, 000 µF·V/g, and the powder was sintered at a sintering temperature of 1, 300°C for a sintering time of 20 minutes to produce a sintered body in a size of 4.5x1.1x3.1 mm (density of sintered body: 5.9 g/cm³; the tantalum lead wire was partially embedded in parallel to the longitudinal direction having a dimension of 4.5 mm of the sintered body and the lead wire part protruded from the sintered body was caused to work out to the anode part). The sintered body as the anode excluding a part of the lead wire was dipped in an aqueous 0.1 mass% phosphoric acid solution and subjected to chemical formation at 80°C for five hours by applying 10 V between the anode and a tantalum plate electrode serving as the cathode to form an oxide dielectric film layer comprising Ta₂O₅. An operation of subjecting this sintered body excluding the lead wire alternately to dipping in a tank containing an aqueous 20 mass% sodium molybdate solution and drying and to dipping in a tank containing an aqueous 10 mass% sodium borohydride solution and drying, and performing post-chemical formation at 80°C with 8 V for ten minutes in an aqueous 0.1 mass% acetic acid solution was repeated multiple times to produce electrical microdefect portions in the dielectric layer.

Subsequently, the sintered body was dipped in a tank (the tank was laminated with a tantalum foil and serving itself as an external electrode) containing a mixed solution of 20 mass% ethylene glycol and water, in which 3% benzoquinonesulfonic acid and pyrrole were charged each in an amount large enough to allow for the presence of an insoluble portion, and by assigning the anode to the lead wire of the sintered body and the cathode to the external electrode, an electric current was passed at 14.5 V for 30 minutes to form a semiconductor layer on the dielectric layer. The sintered body was pulled out, washed with water, washed with an alcohol, dried, subjected to re-chemical formation in an aqueous 1% benzoquinonesulfonic acid solution at 80°C with 7 V for 15 minutes, then pulled out, washed with water, washed with an alcohol, and dried. This process of forming a semiconductor layer and performing re-chemical formation was repeated seven times to form a semiconductor layer comprising polypyrrole with a dopant of benzoquinonesulfonate ion. On this semiconductor layer, a carbon paste layer was stacked and dried to provide a carbon layer, and then a silver paste mainly comprising 93 mass% of silver powder and 7 mass% of epoxy resin was stacked and dried to form an electrode layer. In this way, a plurality of solid electrolytic capacitor elements were produced. On two end parts of a separately prepared lead frame (copper alloy KLF, produced by Kobe Steel, Ltd., with both surfaces being applied with 0.7-µm nickel primer plating and 7-µm non-gloss tin plating) serving as an external electrode, the lead wire on the sintered body side and the silver paste surface on the electrode layer side were placed and electrically or mechanically connected by spot-welding for the former and by the same silver paste as used in the electrode layer for the latter. Thereafter, the entirety excluding a part of the lead flame was transfer-molded with epoxy resin and the lead frame outside the mold was cut at a predetermined position and then bent along the jacket to serve as an external terminal. In this way, a chip solid electrolytic capacitor in a size of 7.3×4.3×1.8 mm was produced.

Subsequently, the capacitor was aged at 135°C with 3 V for three hours and then left standing in a furnace at 150°C for 15 minutes to cure the jacket resin, thereby completing a final chip solid electrolytic capacitor.

### Comparative Example 5:

A chip solid electrolytic capacitor was produced in the same manner as in Example 3 except for performing the re-chemical formation in an aqueous 0.1 mass% phosphoric acid solution.

### Comparative Example 6:

A chip solid electrolytic capacitor was produced in the same manner as in Example 3 except for performing the re-chemical formation in an aqueous 0.1 mass% benzoic acid solution in Example 3.

The performances of the capacitors produced in Examples 1 to 3 and Comparative Examples 1 to 6 were measured by the following methods. The results thereof are shown together in Table 1. Incidentally, data in Table 1 are an average value of 30 units of the capacitors of each Example.

### Capacitance:

The capacitance was measured at room temperature and 120 Hz by using an LCR measuring meter manufactured by Hewlett Packard, Ltd.

### ESR:

The equivalent series resistance of the capacitor was measured at 100 kHz.

### LC:

The LC was measured at room temperature for 30 seconds with a rated voltage of 4 V in Examples 1 and 2 and Comparative Examples 1 to 4 and with a rated voltage of 2.5 V in Example 3 and Comparative Examples 5 and 6.
[Table 1]

**Table 1**

| | | Capacitance (µF) | ESR (mΩ) | LC (µA) |
|---|---|---|---|---|
| Example | 1 | 630 | 10 | 24 |
| | 2 | 625 | 11 | 25 |
| | 3 | 1040 | 6 | 33 |
| Comparative Example | 1 | 630 | 21 | 24 |
| | 2 | 630 | 20 | 25 |
| | 3 | 630 | 22 | 25 |
| | 4 | 625 | 23 | 26 |
| | 5 | 1040 | 15 | 34 |
| | 6 | 1040 | 14 | 35 |

As seen from comparison of Example 1 with Comparative Examples 1 to 3, comparison of Example 2 with Comparative Example 4 and comparison of Example 3 with Comparative Examples 5 and 6, when the dielectric layer after the formation of a semiconductor layer is repaired by performing re-chemical formation in an electrolytic solution using a dopant as the electrolyte, the produced solid electrolytic capacitor has a very good ESR value.

### INDUSTRIAL APPLICABILITY

The present invention provides a method for producing a solid electrolytic capacitor element, where re-chemical formation is performed in an electrolytic solution using a dopant as the electrolyte to repair the dielectric layer after formation of the semiconductor layer, and also provides a solid electrolytic capacitor resulting from molding of a capacitor element produced by the production method. According to the present invention, a good solid electrolytic capacitor with a low initial ESR value can be produced.

## Claims

1. A method for producing a solid electrolytic capacitor element, comprising forming a dielectric layer by chemical formation on the surface of an electric conductor, and sequentially forming a semiconductor layer containing electrically conducting polymer and an electrode layer on the dielectric layer, wherein after forming the semiconductor layer, re-chemical formation is performed in an electrolytic solution using a dopant as the electrolyte, said re-chemical formation being the same as said chemical formation and being carried out to repair fine defects of the dielectric layer, which are generated due to formation of the semiconductor layer.

2. The method for producing a solid electrolytic capacitor element as claimed in claim 1, wherein the dopant is the same as the dopant contained in the electrically conducting polymer constituting the semiconductor layer.

3. The method for producing a solid electrolytic capacitor element as claimed in claim 1 or 2, wherein the dopant is at least one member selected from a compound having a sulfonic acid group and a boron compound in which a carboxylic acid is coordinated to the boron atom.

4. The method for producing a solid electrolytic capacitor element as claimed in claim 1, wherein the electric conductor is a metal or alloy mainly comprising at least one member selected from tantalum, niobium, titanium and aluminum; a niobium oxide; or a mixture of at least two of the members selected from these metals, alloy and niobium oxide.

5. The method for producing a solid electrolytic capacitor element as claimed in claim 1, wherein the semiconductor layer is at least one layer selected from semiconductors mainly comprising an electrically conducting polymer obtained by doping a dopant in a polymer containing a repeating unit represented by the following formula (1) or (2): 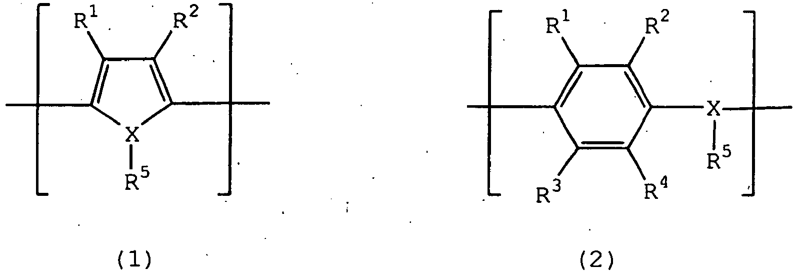 wherein R¹ to R⁴ each independently represents a hydrogen atom, an alkyl group having from 1 to 6 carbon atoms or an alkoxy group having from 1 to 6 carbon atoms, X represents an oxygen atom, a sulfur atom or a nitrogen atom, R⁵ is present only when X is a nitrogen atom, and represents a hydrogen atom or an alkyl group having from 1 to 6 carbon atoms, and each of the pairs R¹ and R², and R³ and R⁴ may combine to form a cyclic structure.

6. The method for producing a solid electrolytic capacitor element as claimed in claim 5, wherein the polymer containing a repeating unit represented by formula (1) is a polymer containing, as a repeating unit, a structure unit represented by the following formula (3) : 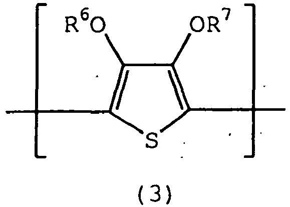 wherein R⁶ and R⁷ each independently represents a hydrogen atom, a linear or branched, saturated or unsaturated alkyl group having from 1 to 6 carbon atoms, or a substituent for forming at least one or more 5-, 6-or 7-membered saturated hydrocarbon cyclic structure containing two oxygen atoms when the alkyl groups are combined with each other at an arbitrary position, and the cyclic structure includes a structure having a vinylene bond which may be substituted, and a phenylene structure which may be substituted.

7. The method for producing a solid electrolytic capacitor element as claimed in claim 5, wherein the electrically conducting polymer is selected from polyaniline, polyoxyphenylene, polyphenylene sulfide, polythiophene, polyfuran, polypyrrole, polymethylpyrrole, and a substitution derivative and a copolymer thereof.

8. The method for producing a solid electrolytic capacitor element as claimed in claim 7, wherein the electrically conducting polymer is poly(3,4-ethylene-dioxythiophene).

9. A solid electrolytic capacitor element obtained by the production method claimed in any one of claims 1 to 8.

10. A solid electrolytic capacitor obtained by sealing the solid electrolytic capacitor element claimed in claim 9.

11. An electronic circuit comprising the solid electrolytic capacitor claimed in claim 10.

12. An electronic device comprising the solid electrolytic capacitor claimed in claim 10.

## Patentansprüche

1. Verfahren zum Herstellen eines Festelektrolytkondensatorelements, welches das Bilden einer dielektrischen Schicht durch chemische Bildung auf der Oberfläche eines elektrischen Leiters und das anschließende Bilden einer ein elektrisch leitendes Polymer enthaltenden Halbleiterschicht und einer Elektrodenschicht auf der dielektrischen Schicht, wobei nach dem Bilden der Halbleiterschicht eine chemische Umbildung in einer elektrolytischen Lösung unter Einsatz eines Dotierungsmittels als Elektrolyt durchgeführt wird, wobei die chemische Umbildung dieselbe wie die chemische Bildung ist und durchgeführt wird, um aufgrund der Bildung der Halbleiterschicht erzeugte feine Fehlstellen der dielektrischen Schicht zu beheben.

2. Verfahren zum Herstellen eines Festelektrolytkondensatorelements nach Anspruch 1, wobei das Dotierungsmittel dasselbe ist wie das Dotierungsmittel, das in dem elektrisch leitenden Polymer enthalten ist, aus dem die Halbleiterschicht besteht.

3. Verfahren zum Herstellen eines Festelektrolytkondensatorelements nach Anspruch 1 oder 2, wobei das Dotierungsmittel mindestens ein Mitglied der Gruppe ist, die aus einer Verbindung mit einer Sulfonsäuregruppe und einer Borverbindung, worin eine Carbonsäure an ein Boratom koordiniert ist, besteht.

4. Verfahren zum Herstellen eines Festelektrolytkondensatorelements nach Anspruch 1, wobei der elektrische Leiter ein Metall oder eine Legierung, das/die hauptsächlich ein unter Tantal, Niob, Titan und Aluminium ausgewähltes Metall enthält; ein Nioboxid; oder ein Gemisch von mindestens zwei Mitgliedern ist, die aus diesen Metallen, Legierung und Nioboxid ausgewählt sind.

5. Verfahren zum Herstellen eines Festelektrolytkondensatorelements nach Anspruch 1, wobei die Halbleiterschicht mindestens eine Schicht ist, die unter Halbleitern ausgewählt ist, die hauptsächlich ein durch Dotieren eines Dotierungsmittels in ein Polymer mit den Wiederholungseinheiten der folgenden Formel (1) oder (2) erhaltenes elektrisch leitendes Polymer enthalten: 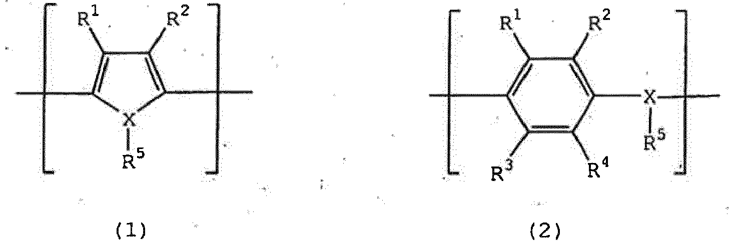 worin R¹ bis R⁴ unabhängig voneinander ein Wasserstoffatom, eine Alkylgruppe mit 1 bis 6 Kohlenstoffatomen oder eine Alkoxygruppe mit 1 bis 6 Kohlenstoffatomen darstellt, X ein Sauerstoffatom, ein Schwefelatom oder ein Stickstoffatom darstellt, R⁵ nur vorhanden ist, wenn X ein Stickstoffatom ist, und ein Wasserstoffatom oder eine Alkylgruppe mit 1 bis 6 Kohlenstoffatomen darstellt, und jedes der Paare R¹ und R² sowie R³ und R⁴ unter Bildung einer cyclischen Struktur kombiniert sein kann.

6. Verfahren zum Herstellen eines Festelektrolytkondensatorelements nach Anspruch 5, wobei das die Wiederholungseinheit der Formel (1) enthaltende Polymer ein Polymer ist, das als Wiederholungseinheit eine Struktureinheit der folgenden Formel (3) enthält: 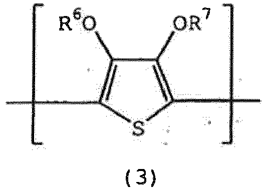 worin R⁶ und R⁷ jeweils unabhängig voneinander ein Wasserstoffatom, eine lineare oder verzweigte, gesättigte oder ungesättigte Alkylgruppe mit 1 bis 6 Kohlenstoffatomen oder einen Substituenten für die Bildung mindestens einer oder mehrerer 5-, 6- oder 7-gliedriger gesättigter cyclischer Kohlenwasserstoffstrukturen darstellen, die zwei Sauerstoffatome enthalten, wenn die Alkylgruppen miteinander an beliebigen Positionen kombiniert werden, und die cyclische Struktur eine Struktur mit einer Vinylenbindung, die substituiert sein kann, und eine Phenylenstruktur, die substituiert sein kann, enthält.

7. Verfahren zum Herstellen eines Festelektrolytkondensatorelements nach Anspruch 5, wobei das elektrisch leitende Polymer unter Polyanilin, Polyoxyphenylen, Polyphenylensulfid, Polythiophen, Polyfuran, Polypyrrol, Polymethylpyrrol und einem Substitutionsderivat und einem Copolymer davon ausgewählt ist.

8. Verfahren zum Herstellen eines Festelektrolytkondensatorelements nach Anspruch 7, wobei das elektrisch leitende Polymer Poly(3,4-ethylendioxythiophen) ist.

9. Festelektrolytkondensatorelement, erhalten durch das Herstellungsverfahren nach einem der Ansprüche 1 bis 8.

10. Festelektrolytkondensator, erhalten durch Versiegeln des in Anspruch 9 definierten Festelektrolytkondensatorelements.

11. Elektronischer Schaltkreis, der den Festelektrolytkondensator nach Anspruch 10 enthält.

12. Elektronische Vorrichtung, die den Festelektrolytkondensator nach Anspruch 10 enthält.

## Revendications

1. Procédé de production d'un élément de condensateur à électrolyte solide, comprenant la formation d'une couche diélectrique par formation chimique sur la surface d'un conducteur électrique, et la formation séquentielle d'une couche de semi-conducteur contenant un polymère conducteur et d'une couche d'électrode sur la couche diélectrique, dans lequel après la formation de la couche de semi-conducteur, une nouvelle formation chimique est réalisée dans une solution électrolytique à l'aide d'un dopant en tant qu'électrolyte, ladite nouvelle formation chimique étant identique à ladite formation chimique et étant réalisée pour réparer les petits défauts de la couche diélectrique, qui sont générés en raison de la formation de la couche de semi-conducteur.

2. Procédé de production d'un élément de condensateur à électrolyte solide selon la revendication 1, dans lequel le dopant est identique au dopant contenu dans le polymère conducteur constituant la couche de semi-conducteur.

3. Procédé de production d'un élément de condensateur à électrolyte solide selon la revendication 1 ou 2, dans lequel le dopant est au moins un élément choisi parmi un composé comportant un groupe acide sulfonique et un composé à base de bore dans lequel un acide carboxylique est lié par coordination à l'atome de bore.

4. Procédé de production d'un élément de condensateur à électrolyte solide selon la revendication 1, dans lequel le conducteur électrique est un métal ou un alliage comprenant principalement au moins un élément choisi parmi le tantale, le niobium, le titane et l'aluminium ; un oxyde de niobium ; ou un mélange d'au moins deux des éléments choisis parmi ces métaux, alliage et oxyde de niobium.

5. Procédé de production d'un élément de condensateur à électrolyte solide selon la revendication 1, dans lequel la couche de semi-conducteur est au moins une couche choisie parmi les semi-conducteurs comprenant principalement un polymère électriquement conducteur obtenu en dopant un dopant dans un polymère contenant un motif répétitif représenté par la formule (1) ou (2) suivante : 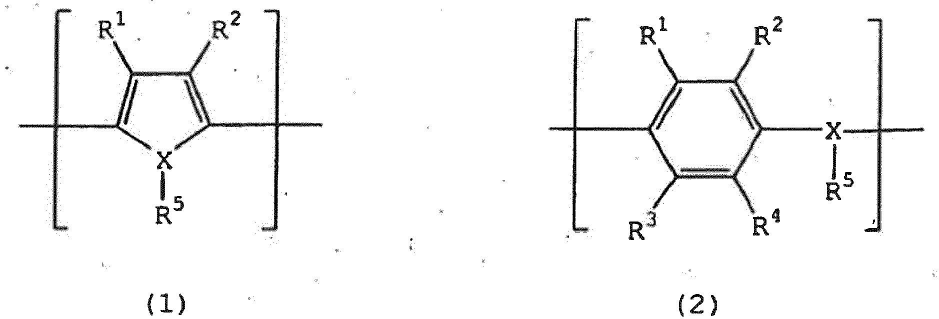 dans lequel R¹ à R⁴ représentent chacun indépendamment un atome d'hydrogène, un groupe alkyle comportant de 1 à 6 atomes de carbone ou un groupe alcoxy comportant de 1 à 6 atomes de carbone, X représente un atome d'oxygène, un atome de soufre ou un atome d'azote, R⁵ n'est présent que lorsque X est un atome d'azote, et représente un atome d'hydrogène ou un groupe alkyle comportant de 1 à 6 atomes de carbone, et chacune des paires R¹ et R², et R³ et R⁴ peut se combiner pour former une structure cyclique.

6. Procédé de production d'un élément de condensateur à électrolyte solide selon la revendication 5, dans lequel le polymère contenant un motif répétitif représenté par formule (1) est un polymère contenant, en tant que motif répétitif, un motif structurel représenté par la formule (3) suivante : 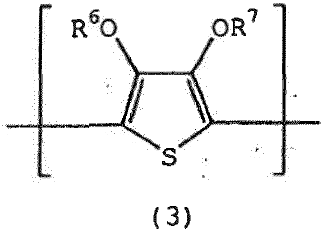 dans lequel R⁶ et R⁷ représentent chacun indépendamment un atome d'hydrogène, un groupe alkyle linéaire ou ramifié, saturé or insaturé, comportant de 1 à 6 atomes de carbone, ou un substituant pour former au moins une ou plusieurs structures cycliques hydrocarbonées saturées à 5, 6 ou 7 chaînons contenant deux atomes d'oxygène lorsque les groupes alkyles sont combinés l'un à l'autre au niveau d'une position arbitraire, et la structure cyclique inclut une structure ayant une liaison vinylène qui peut être substituée, et une structure phénylène qui peut être substituée.

7. Procédé de production d'un élément de condensateur à électrolyte solide selon la revendication 5, dans lequel le polymère conducteur est choisi parmi la polyaniline, le polyoxyphénylène, le sulfure de polyphénylène, le polythiophène, le polyfurane, le polypyrrole, le polyméthylpyrrole, et un dérivé de substitution et un copolymère de ceux-ci.

8. Procédé de production d'un élément de condensateur à électrolyte solide selon la revendication 7, dans lequel le polymère conducteur est le poly(3,4-éthylène-dioxythiophène).

9. Élément de condensateur à électrolyte solide obtenu par le procédé de production revendiqué dans l'une quelconque des revendications 1 à 8.

10. Condensateur à électrolyte solide obtenu en scellant l'élément de condensateur à électrolyte solide selon la revendication 9.

11. Circuit électronique comprenant le condensateur à électrolyte solide selon la revendication 10.

12. Dispositif électronique comprenant le condensateur à électrolyte solide selon la revendication 10.
